# EUROPEAN PATENT APPLICATION

(11) **EP 1 786 113 A2**
(43) Date of publication of application: **16.05.2007**
(21) Application number: 06122540.5
(22) Date of filing: 18.10.2006
(51) Int. Cl.: H04B 1/28

(54) **Radio reception device for receiving both terrestrial and satellite digital broadcasting**

(30) Priority: 09.11.2005 KR 20050107130
(71) Applicant: Samsung Electronics Co., Ltd., Suwon-si 442-742 Gyeonggi-Do (KR)
(72) Inventor: Son, Ju-ho, Suwon-si, Gyeonggi-do (KR); Ryu, Jae-young, Yeongtong-gu, Gyeonggi-do (KR)
(74) Representative: Davies, Robert Ean

(57) **Abstract**

A radio reception device for receiving both terrestrial and satellite digital broadcasting. The device includes a reception device for a first radio communication method and a reception device for a second radio communication method. The reception device for a first radio communication method includes a first reception unit (100) which receives and amplifies a first input frequency signal, a Local Oscillation (LO) signal generation unit (120) which generates an LO frequency signal, a first mixing unit (105) which outputs a frequency down-converted signal, and a signal processing unit (110) which receives the signal output from the first mixing unit and performing signal processing. The reception device for a second radio communication method includes a second reception unit (200) which receives and amplifies a second input frequency signal, a frequency divider (204), and a second mixing unit (205) which outputs a frequency down-converted signal to the signal processing unit (110).

## Description

Apparatuses consistent with the present invention relate to a radio reception device and, more particularly, to a radio reception device for receiving both terrestrial and satellite digital broadcasting.

As digital broadcasting technology and mobile communication technology are developed, interest in digital broadcasting service, which enables digital broadcasts to be watched even while moving, is increasing. There is particular interest in Digital Multimedia Broadcasting (DMB) service using mobile communication terminals. DMB refers to a broadcasting service that enables a user to watch various multimedia broadcast programs even while moving, using a personal mobile receiver or a vehicle receiver, with an installed omnidirectional reception antenna. A DMB communication method may be defined as a kind of digital radio communication service that enables the reception of high-quality images through a very high frequency band, currently used for analog TV broadcasting, even while moving. In this case, DMB is classified as Terrestrial DMB (T-DMB) or Satellite DMB (S-DMB) according to the method of transmitting and receiving radio waves.

T-DMB uses Eureka-147, that is, the standard for Europe digital audio broadcasting, as a fundamental specification standard, and has characteristics in that three blocks are created through the division of one channel, and a plurality of video and audio channels is created for each block. S-DMB broadcasts radio waves from a satellite, which is outside the atmosphere, towards the intended area. In this case, when a terrestrial broadcasting center sends various pieces of multimedia content to the satellite through a satellite frequency band (a Ku-band of 12 to 13 GHz), the satellite spreads the content to terrestrial DMB reception terminals through an S-band (2.630 to 2.655 GHz) allocated to use for DMB. In the case where it is not easy to directly receive satellite signals, signals can be transmitted through the downward frequencies of the Ku-band from the satellite to a terrestrial relay, which is called a gap filler, and then further relayed from the gap filler to a subscriber's reception terminal through the S-band. In this case, a frequency of a 200 MHz band is used, and radio waves have a diffraction characteristic appropriate for long distance transmission.

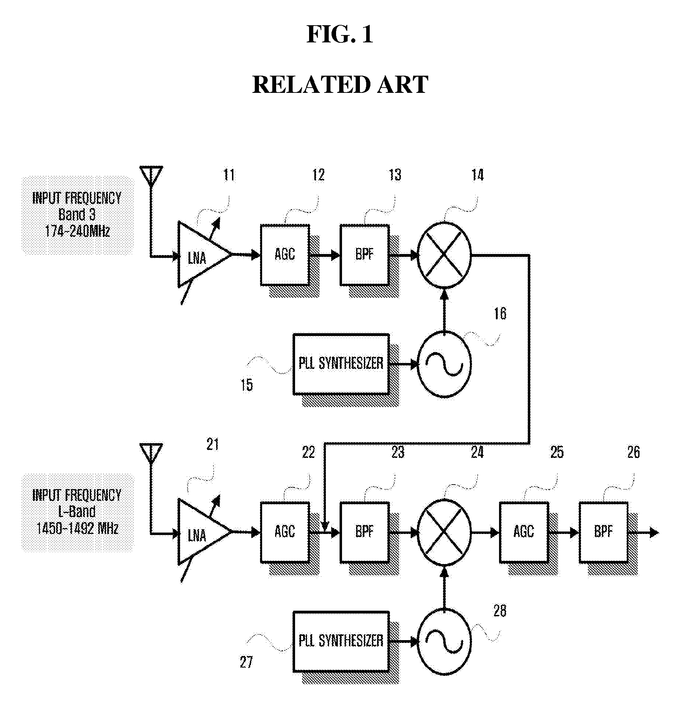

FIG. 1 is a block diagram showing the construction of a related art T-DMB reception device. Referring to FIG. 1, when a Band III frequency signal in a frequency band from 174 to 240 MHz is input, the signal is received through an antenna and amplified by a first Low-Noise (LNA) amplifier 11, the magnitude of the signal is amplified by a first Automatic Gain Control (AGC) amplifier 12, , the signal is passed through a first Band-Pass Filter (BPF) 13 and the specific resulting frequency is then input to a first mixer 14. Meanwhile, a Local Oscillation (LO) frequency signal, generated by a first Phase Locked Loop (PLL) synthesizer 15 and a first Voltage Controlled Oscillator (VCO) 16, is also input to the first mixer 14. The first mixer 14 then down-converts the frequency of the received signal in proportion to the difference between two frequencies by mixing the first signal, which has passed through the BPF 13, with the second signal, which is output by the first VCO 16, resulting in a locked Intermediate Frequency (IF) signal. The IF signal is passed through a second BPF 23 and then input into a second mixer 24. Next, the input signal is mixed with an LO frequency signal, generated by a second PLL synthesizer 27 and a second VCO 28, with the result being a down-converted signal. The down-converted signal is output via a third AGC amplifier 25 and a third BPF 26. Furthermore, when an L-Band frequency signal, in a band from 1450 to 1492 MHz, is input to another reception antenna, the input frequency signal passes through a second LNA 21, a second AGC amplifier 22 and the second BPF 23, and is input to the second mixer 24. The signal input to the second mixer 24 is output via the same path as the signal that is output from the first mixer 14.

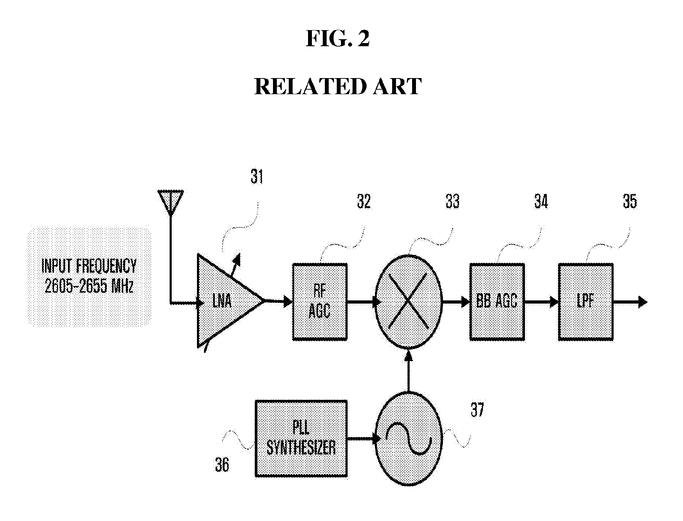

FIG. 2 is a block diagram showing the construction of a related art S-DMB reception device. Referring to FIG. 2, when an input frequency signal in a band from 2605 to 2655 MHz is input, the input frequency signal is amplified through an LNA 31, the magnitude of the signal is automatically controlled by a Radio Frequency (RF) AGC amplifier 32 and then the signal is input to a mixer 33. An LO frequency signal, which is generated by a PLL synthesizer 36 and a VCO 37, is input to the mixer 33. The mixer 33 down-converts the frequency of the two input signals in proportion to a difference between two frequencies by mixing a signal, which has passed through the RF AGC 32, with a signal, which is output from the VCO 37, therefore outputting a down-converted signal. The signal output by the mixer 33 is output via an analog processing unit, made up of the Baseband (BB) AGC amplifier 34 and a low pass filter (LPF) 35.

However, in accordance with the conventional technology described above, the S-DMB reception device and the T-DMB reception device are separately used as devices for each type of communication, so that a problem occurs because both types of broadcasting services cannot be simultaneously received using a single reception device Integrated Circuit (IC). If two reception ICs corresponding to the respective communication methods must be provided in a single reception device to solve the problem, the cost and size of a product increase, therefore a problem occurs in that applicability to mobile communication devices is limited.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Embodiments of the present invention provide a radio reception device, which integrates radio communication schemes, having different bands, particularly, RF reception devices based on T-DMB and S-DMB standards, into a single chip, thus enabling reception of both terrestrial and satellite digital broadcasting.

According to an aspect of the present invention, there is provided a radio reception device for receiving both a first input frequency signal based on a first radio communication method and a second input frequency signal based on a second radio communication method. The radio reception device includes: a reception device for a first radio communication method, the reception device having a first reception unit receiving and amplifying the first input frequency signal; a Local Oscillation (LO) signal generation unit generating an LO frequency signal locked to a single frequency value; a first mixing unit outputting a frequency down-converted signal by mixing the first input frequency signal, which is amplified by the first reception unit, with the LO frequency signal, which is generated by the LO signal generation unit; and a signal processing unit receiving the signal output from the first mixing unit and performing signal processing. The radio reception device further includes a reception device for a second radio communication method, the reception device having a second reception unit receiving and amplifying the second input frequency signal; a frequency divider dividing the signal, which is generated by the LO signal generation unit, at a predetermined division ratio; and a second mixing unit outputting a frequency down-converted signal by mixing the second input frequency signal, which is amplified by the second reception unit, with a signal resulting from the division of the frequency divider, and inputting the frequency down-converted signal to the signal processing unit.

For a better understanding of the invention, and to show how embodiments of the same may be carried into effect, reference will now be made, by way of example, to the accompanying diagrammatic drawings in which:
FIG. 1 is a block diagram showing the construction of a related art T-DMB reception device;
FIG. 2 is a block diagram showing the construction of a related art S-DMB reception device;
FIG. 3 is a block diagram showing the construction of a radio reception device for receiving both terrestrial and satellite digital broadcasting according to a first exemplary embodiment of the present invention;
FIG. 4 is a block diagram showing the construction of a radio reception device for receiving both terrestrial and satellite digital broadcasting according to a second exemplary embodiment of the present invention;
FIG. 5 is a block diagram showing the construction of a radio reception device for receiving both terrestrial and satellite digital broadcasting according to a third exemplary embodiment of the present invention;
FIG. 6 is a block diagram showing the construction of a radio reception device for receiving terrestrial and satellite digital broadcasting according to a fourth exemplary embodiment of the present invention;
FIG. 7 is a block diagram showing the construction of a radio reception device for receiving both terrestrial and satellite digital broadcasting according to a fifth exemplary embodiment of the present invention;
FIG. 8 is a block diagram showing the construction of a radio reception device for receiving both terrestrial and satellite digital broadcasting according to a sixth exemplary embodiment of the present invention; and
FIG. 9 is a diagram showing the comparisons of the schemes according to the first to sixth exemplary embodiments of the present invention.

The advantages and characteristics of embodiments of the present invention, and the method of achieving them, will be apparent with reference to exemplary embodiments described in detail later in conjunction with the accompanying drawings. However, the present invention is not limited to the exemplary embodiments disclosed below, but may be implemented in various ways. Furthermore, the exemplary embodiments are provided to complete the disclosure of the present invention, and to fully notify those skilled in the art of the scope of the present invention. The present invention is defined only by the appended claims. The same reference numerals are used throughout the different drawings to designate the same or similar components.

Exemplary embodiments of the present invention are described in detail with reference to the accompanying drawings below.

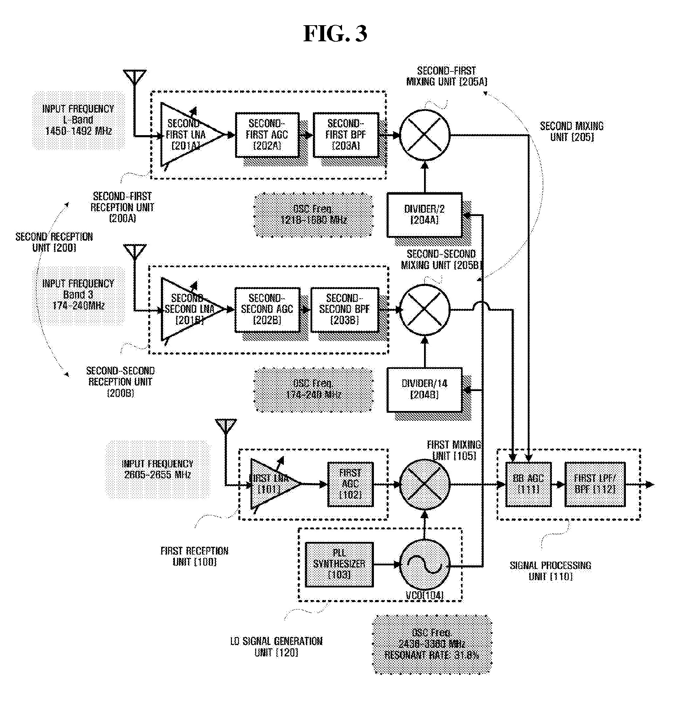

FIG. 3 is a block diagram showing the construction of a radio reception device for receiving both terrestrial and satellite digital broadcasting according to a first exemplary embodiment of the present invention.

Referring to FIG. 3, the radio reception device is implemented in such a manner that a reception device for a first radio communication method and a reception device for a second radio communication method are integrated in a single chip. The reception device for a first radio communication method includes a first reception unit 100 which receives and amplifies a first input frequency signal, an LO signal generation unit 120 which generates an LO frequency signal locked to a single magnitude frequency, a first mixing unit 105 which outputs a frequency down-converted signal by mixing the first input frequency signal, which is amplified by the first reception unit 100, with the LO frequency signal, which is generated by the LO signal generation unit 120, and a signal processing unit 110 which receives the signal output from the first mixing unit 105 and performs signal processing.

The reception device for a second radio communication method includes a second reception unit 200 which receives and amplifies a second input frequency signal, a frequency divider 204 which divides the signal generated by the LO signal generation unit 120, at a predetermined division ratio, and a second mixing unit 205 which outputs a frequency down-converted signal by mixing the second input frequency signal, which is amplified by the second reception unit 200, with a signal which results from the division by the frequency divider 204, and inputs the frequency down-converted signal to the signal processing unit 110.

Although in the exemplary embodiment of the present invention, a description of the case where the first radio communication method is an S-DMB communication method and the second radio communication method is a T-DMB communication method is given by way of example, the scope of the present invention is not limited only thereto.

The reception device for an S-DMB communication method, which is indicated by gray blocks in the lower portion of FIG. 3, is described below. The reception device for an S-DMB communication method includes the first reception unit 100, the LO signal generation unit 120, the first mixing unit 105, and the signal processing unit 110. The first reception unit 100 includes a first LNA 101, which amplifies the first input frequency signal received in a frequency band from 2605 to 2655 MHz, and a first AGC amplifier 102, which automatically controls the magnitude of a signal that is amplified and output by the first LNA 101 and outputs the controlled signal to the first mixing unit 105. The LO signal generation unit 120 generates the LO frequency signal, and includes a VCO 104 and a PLL synthesizer 103. The VCO 104 generates the LO frequency signal and output the generated LO frequency signal to the first mixing unit 105. The VCO could also output the generated LO frequency signal to a 1/2 or 1/14 divider 204A or 204B, that is, a frequency divider provided in the Reception device for a T-DMB method, which will be described later. The PLL synthesizer 103 provides the control voltage for controlling the VCO 104. Generally, a PLL is a circuit that makes the phase of an input signal the same as that of an output signal by detecting the phase difference between the input signal and the output signal and controlling the phase of an output signal generator using voltage in proportion to the phase difference, and a PLL synthesizer includes a phase comparator, a low-pass filter, an error amplifier, and a VCO. In the present embodiment, the VCO 104 is illustrated as being separate from the PLL synthesizer 103.

The first mixing unit 105 outputs the frequency down-converted signal by mixing the first input frequency signal (2605 ~ 2655 MHz), which is amplified by the first AGC amplifier 102, with the LO frequency signal, which is generated by the VCO 104. The resulting down-converted signal is input to the signal processing unit 110 and undergoes analog signal processing. The signal processing unit 110 includes a Base band (BB) AGC amplifier 111 and a first BPF 112. In this case, the BB AGC amplifier 111 functions to receive a signal, which is output from the first mixing unit 105 or from a second-first mixing unit 205A or a second-second mixing unit 205B the second mixing unit 205, and automatically adjust the magnitude of the received signal within a BB frequency range. The first BPF 112 filters the signal controlled by the BB AGC amplifier 111 and, thereby, output a signal in a specific band. Furthermore, as shown in FIG. 3, the first BPF 112 may selectively use an LPF or a BPF according to the frequency range of the signal output from the mixing unit.

The reception device for a T-DMB method, which is indicated by white blocks in the upper portion of FIG. 3, is described below. The second reception unit 200 is divided into a second-first reception unit 200A, which receives an L-band frequency signal and a second-second reception unit 200B, which receives a band-III frequency signal. The second-first reception unit 200A and the second-second reception unit 200B are controlled so as to respectively receive the L-band frequency signal and the band-III frequency signal. In this case, the L-band frequency signal occupies a band from 1450 to 1492 MHz, and the band-III frequency signal occupies a band from 174 to 240 MHz.

### [01]

A description of the detailed construction of the second-first reception unit 200A is given below. The second-first reception unit 200A includes a second-first LNA 201A, a second-first AGC amplifier 202A, and a second-first BPF 203A. The second-first LNA 201A amplifies the received L-band frequency signal. The second-first AGC amplifier 202A automatically controls the magnitude of the signal amplified and output by the second-first LNA 201A, and outputs the controlled signal. The second-first BPF 203A extracts a signal within a specific frequency band by filtering the signal output from the second-first AGC amplifier 202A, and outputs the extracted signal to a second-first mixing unit 205A, which will be described later.

A detailed description of the second-second reception unit 200B is given below. The second-second reception unit 200B includes a second-second LNA 201B, a second-second AGC amplifier 202B, and a second-second BPF 203B. The second-second LNA 201B functions to amplify the received band-III frequency signal. The second-second AGC amplifier 202B automatically controls the magnitude of the signal amplified and output by the second-second LNA 201B, and outputs two controlled signal. The second-second BPF 203B extracts a signal within a specific frequency band by filtering the signal output from the second-second AGC amplifier 202B, and then outputs the extracted signal to a second-second mixing unit 205B, which will be described later.

The second mixing unit 205 includes the second-first mixing unit 205A and the second-second mixing unit 205B perform up-conversion or down-conversion by mixing two types of signals. In order to input signals to the mixers, frequency dividers are used. When an L-band frequency signal (1450 ~ 1492 MHz) is input to the second-first mixing unit 205A through the second-first reception unit 200A, the signal output from the 1/2 divider 204A is input to the second-first mixing unit 205A. When the frequency signal of the band-III (174 ~ 240 MHz) is input to the second-second mixing unit 205B through the second-second reception unit 200B, a signal output from the 1/14 divider 204B is input to the second-second mixing unit 205B.

The frequency signal output from the VCO 104 falls within a band from 2436 to 3360 MHz, so that a frequency signal that falls within a band broader than the L-band from 1450 to 1492 MHZ must be supplied to the second-first mixing unit 205A to cover L-band frequency signals (1450 ~ 1492 MHz). For this reason, a 1/2 divider 204A is used. When the 1/2 divider 204A is used, a frequency signal in a band from 2436 to 3360 MHz is divided in half and, therefore, is converted into a signal in a band from 1218 to 1680 MHz band. In the same manner, in order to cover a band-III frequency signal (174 ~ 240 MHz), a frequency signal that falls within a band broader than a band from 174 to 240 MHz must be supplied to the second-second mixing unit 205B. Accordingly, when the 1/14 divider 204B, which divides a frequency signal in a band from 2436 to 3360 MHz by 14, is used, the frequency signal is converted into a signal in a band from 174 to 240 MHz and is then supplied to the second-second mixing unit 205B.

A description of the second-first mixing unit 205A and the second-second mixing unit 205B constituting the second mixing unit 205 is given below. The second-first mixing unit 205A functions to perform down-conversion by mixing a signal obtained by filtering the second-first BPF 203A of the second-first reception unit 200A with a signal resulting from division by the 1/2 divider 204A and to output a down-converted signal to the BB AGC amplifier 111 of the signal processing unit 110 of the reception device for an S-DMB method. In the same manner, the second-second mixing unit 205B functions to perform down-conversion by mixing a signal obtained by the filtering of the second-second BPF 203B of the second-second reception unit 200B with a signal obtained by the division of the 1/14 divider 204B and to output a down-converted signal to the BB AGC amplifier 111 of the reception device for an S-DMB method.

As described above, the frequency signal obtained by the T-DMB reception device of the upper portion of FIG. 3 can be processed by the S-DMB signal processing unit 110 of the lower portion of FIG. 3, thus the two types of DMB methods can be used.

Hereinafter, schemes for receiving both T-DMB and S-DMB signals according to other exemplary embodiments of the present invention are described.

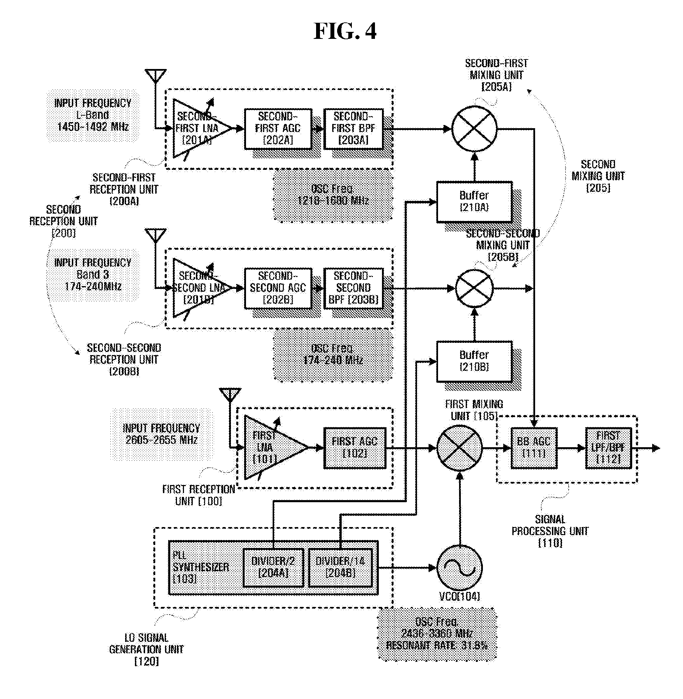

FIG. 4 is a block diagram showing the construction of a radio reception device for receiving both terrestrial and satellite digital broadcasting according to a second exemplary embodiment of the present invention. From FIG. 4, it can be seen that the second exemplary embodiment of FIG. 4 uses the same components as those of the first exemplary embodiment of FIG. 3, except that frequency dividers 204A and 204B are provided as part of the PLL synthesizer 103 of the Reception device for an S-DMB method. That is, with reference to FIG. 4, the 1/2 divider 204A and the 1/14 divider 204B are provided in the PLL synthesizer 103 of the reception device for an S-DMB method. Respective signals obtained by the division of the 1/2 divider 204A and the 1/14 divider 204B are buffered and then input to the second-first mixing unit 205A and the second-second mixing unit 205B, respectively. The buffers 210A and 210B pump the respective signals, which are obtained by the division, into the second-first mixing unit 205A and the second-second mixing unit 205B, and are responsible for buffering to adjust input velocity.

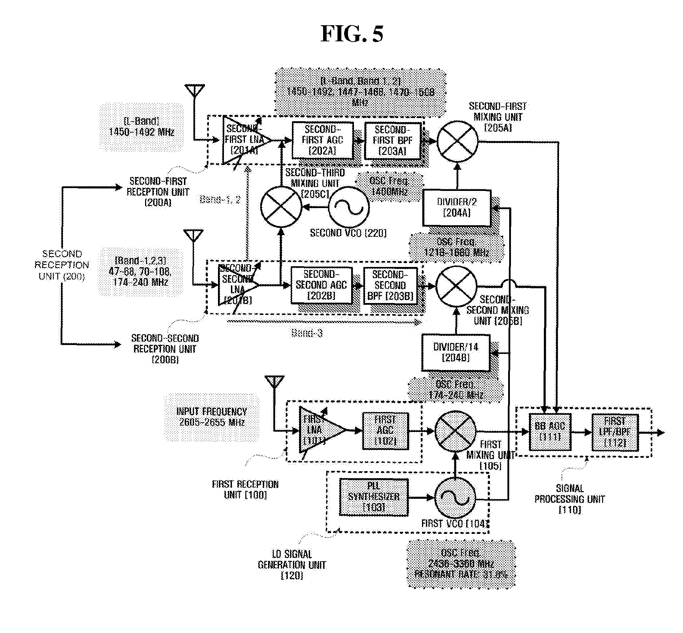

FIG. 5 is a block diagram showing the construction of a radio reception device for receiving both terrestrial and satellite digital broadcasting according to a third exemplary embodiment of the present invention. The third exemplary embodiment of FIG. 5 differs from the first exemplary embodiment of FIG. 3 in that a second-second reception unit 200B can receive a band-I frequency signal (47 ~ 68 MHz) and a band-II frequency signal (70 ~ 108 MHz) as well as a band-II frequency signal (174 ~ 240 MHz). That is, the second-second LNA 201B of the reception device for a T-DMB method can receive and amplify both the band-I and band-II frequency signals. In the case where the band-I and band-II signals are received, even though the band-III frequency signal (174 ~ 240 MHz) is processed and output through the same path as that of the first embodiment, the band-I and band-II signals are amplified by the second-second LNA 201B, are input to a second-first AGC amplifier 202A via a second-third mixing unit 205c, and are then processed therein. Band-I frequencies (47 ~ 68 MHz) and band-II frequencies (70 ~ 108 MHz) are low such that it is necessary to perform up-conversion thereon by inputting the signals to the second-third mixing unit 205C. That is, the second-third mixing unit 205C up-converts the input signals by mixing the signal from the second-second LNA 201B, with an LO frequency signal, which is generated by a second VCO 220. Next, the second-third mixing unit 205C inputs the up-converted signal to the second-first AGC 202A. From FIG. 5, it can be seen that, as a result of the up-conversion performed by the second-third mixing unit 205C, the band-I frequency signal (47 ~ 68 MHz) is up-converted by 1000 MHz to become a frequency signal falling within a band from 1447 to 1468 MHz, and the band-II frequency signal (70 ~ 108 MHz) is up-converted by 1000 MHz to become a frequency signal falling within a band from 1470 to 1508 MHz. Furthermore, the frequency signals are up-converted as described above, so that the resonant rate (bandwidth/central frequency) can be reduced, thereby improving the performance of the VCOs used for frequency selection. Meanwhile, subsequent processes are the same as described in the first embodiment.

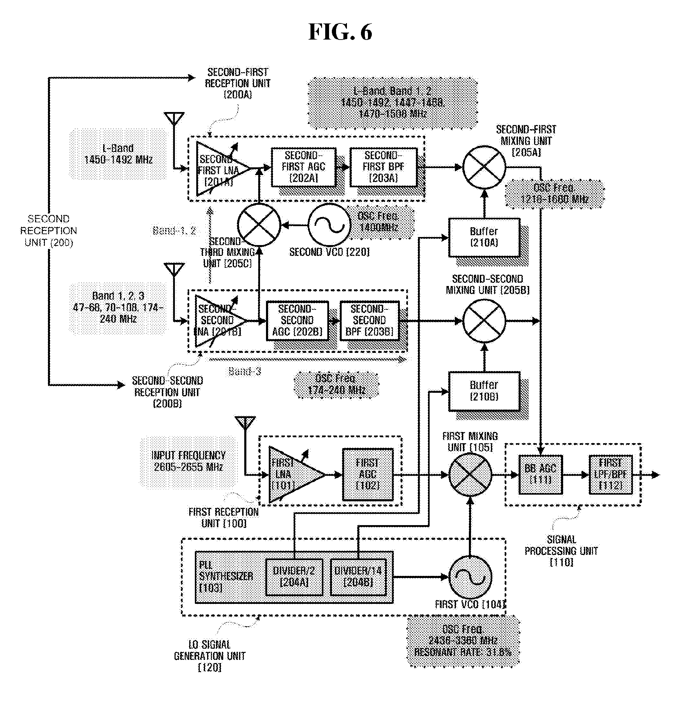

FIG. 6 is a block diagram showing the construction of a radio reception device for receiving both terrestrial and satellite digital broadcasting according to a fourth exemplary embodiment of the present invention. From FIG. 6, it can be seen that the fourth exemplary embodiment uses the same components as those of the third exemplary embodiment of FIG. 5, except that frequency dividers 204A and 204B are provided in the PLL synthesizer 103 of a reception device for an S-DMB method. That is, with reference to FIG. 6, the 1/2 and 1/14 dividers 204A and 204B, respectively, are provided as part of the PLL synthesizer 103 of the reception device for the S-DMB method. Signals obtained the 1/2 and 1/14 dividers 204A and 204B are buffered and then input to a second-first mixing unit 205A and a second-second mixing unit 205B, respectively. Similar to the second exemplary embodiment, the buffers 210A and 210B pump the respective signals obtained by the division, into the second-first mixing unit 205A and the second-second mixing unit 205B, and are responsible for buffering to adjust input velocity.

In the third and fourth exemplary embodiments, the VCO 104, which already exists in the reception device for an S-DMB method, is designated as, for the purpose of convenience, a first VCO 104 so as to differentiate it from the second VCO 220 of the reception device for a T-DMB method that generates the LO frequency signal and inputs the generated signal to the second-third mixing unit 205C.

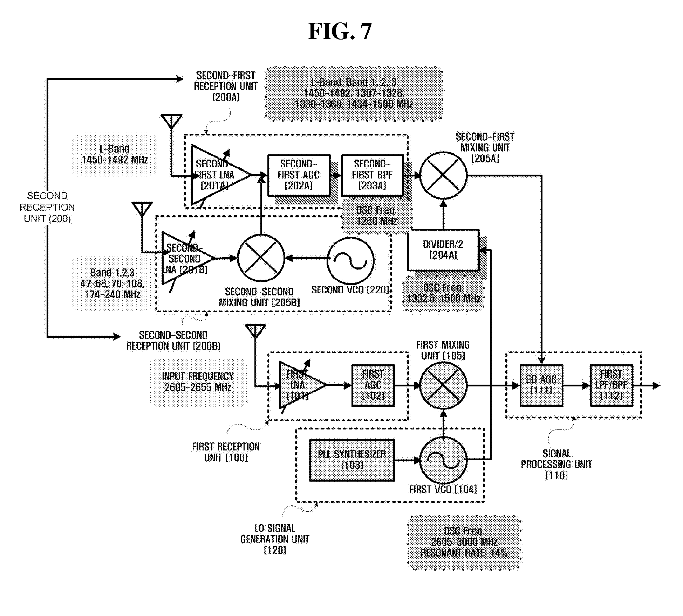

FIG. 7 is a block diagram showing the construction of a radio reception device for receiving both terrestrial and satellite digital broadcasting according to a fifth exemplary embodiment of the present invention. The fifth exemplary embodiment of FIG. 7 is similar to the third or fourth exemplary embodiment in that a second-second LNA 201B can receive both the band-I and band-II frequency signals (47 ~ 68 MHz, 70 ~ 108 MHz) as well as the band-III frequency signal (174 ~ 240 MHz), but differs in that the band-III frequency signals (174 ~ 240 MHz) are transferred to a second-first reception unit 200A that processes L-band signals, are up-converted, and are then processed therein. Furthermore, it can be seen that a 1/2 divider 204A, which performs division by 2, is used as a single frequency divider.

In the fifth exemplary embodiment, the second reception unit 200 is also divided into a second-first reception unit 200A, which can receive the L-band signals, and a second-second reception unit 200B, which can receive all of the band-I, II and III frequency signals. The second-first reception unit 200A includes a second-first LNA 201A which amplifies the received L-band frequency signal, a second-first AGC amplifier 202A which automatically controls the magnitude of a signal amplified and output by the second-first LNA 201A and outputs a controlled signal, and a second-first BPF 203A which extracts a signal within a specific frequency band by filtering the signal output from the second-first AGC amplifier 203A, and inputs the extracted signal to a second-first mixing unit 205A.

The second-second reception unit 200B includes a second-second LNA 201B, which receives and amplifies the band-I, band-II or band-III frequency signal, a second VCO 220, which generates the LO frequency signal, a second-second mixing unit 205B, which inputs an up-converted signal to the second-first AGC 202A by mixing the signal, which is amplified by the second-second LNA 201B, with the LO frequency signal, which is generated by the second VCO 220. In this case, it can be seen that band-I, band-II and band-III frequency signals are up-converted by 1260 MHz by the second-second mixing unit 205B. Furthermore, it can be seen that the resonant rate (bandwidth/central frequency) decreases as the frequency signals are up-converted as described above.

Furthermore, the frequency divider of the fifth exemplary embodiment employs a 1/2 divider 204A that divides in half the frequency magnitude of the signal generated by the LO signal generation unit 120, and inputs the signal obtained by the division to the second-first mixing unit 205A. Similar to the exemplary embodiment shown in FIG. 5, the LO signal generation unit 120 includes a first VCO 104, which generates an LO frequency signal and outputs the generated signal to a first mixing unit 105 or the 1/2 divider 204A, and a PLL synthesizer 103, which outputs control voltage for controlling the first VCO 104.

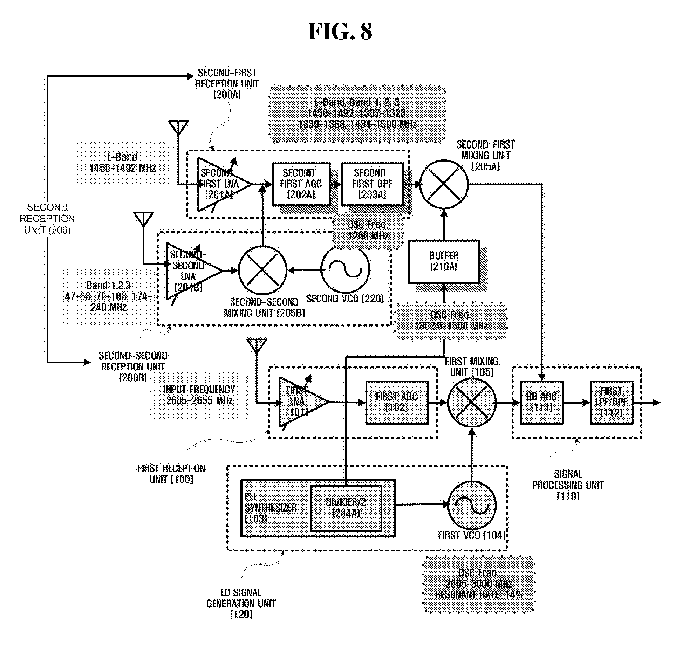

FIG. 8 is a block diagram showing the construction of a radio reception device for receiving both terrestrial and satellite digital broadcasting according to a sixth exemplary embodiment of the present invention. From FIG. 8, it can be seen that the sixth exemplary embodiment of FIG. 8 uses the same components as those of the fifth exemplary embodiment of FIG. 7, except that a frequency divider 204A is provided in the PLL synthesizer 103 of a reception device for an S-DMB method. The signal obtained by the division of the 1/2 divider 204A is buffered and then input to a second-first mixing unit 205A. Subsequent processes are the same as described above.

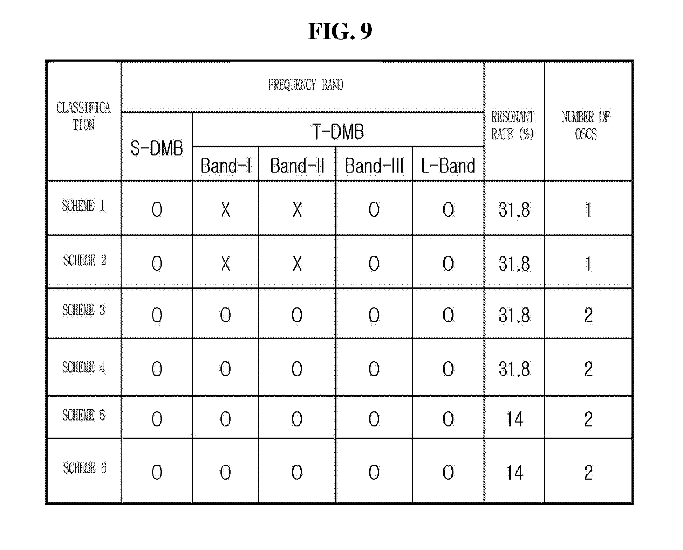

Meanwhile, FIG. 9 is a diagram showing the comparisons of the schemes according to the first to sixth exemplary embodiments of the present invention. From FIG. 9, it can be seen that in the first and second exemplary embodiments the reception device for a T-DMB method receives and processes only band-III and L-band frequency signals, and a single oscillator is used, and in the third to sixth exemplary embodiments the reception device for a T-DMB method receives and processes all band signals, including band-I and band-II frequency signals, and a total of two oscillators are used, as an additional oscillator is used for the T-DMB method reception device. Furthermore, frequency selectivity increases in proportion to the decrease in the resonant rate, that is, the value obtained by dividing bandwidth by a central frequency. Accordingly, it can be seen that the first to fourth embodiments have a resonant rate of 31.8%, and the fifth and sixth exemplary embodiments have a resonant rate of 14%, which is lower than that of the first to fourth exemplary embodiments.

The term "unit," as used herein, includes, but is not limited to, a software or hardware component, such as a Field Programmable Gate Array (FPGA) or an Application Specific Integrated Circuit (ASIC), which performs certain tasks. A module may advantageously be configured to reside on the addressable storage medium and be configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables, among others. The functionality provided for in the components and modules may be combined into fewer components and modules or may be further separated into additional components and modules. Furthermore, the components and modules may be implemented to operate on one or more Central Processing Units (CPUs) residing in a device or a security multimedia card.

In accordance with the exemplary embodiments of the present invention for a radio reception device for both terrestrial and satellite digital broadcasting, broadcasting services based on terrestrial DMB and satellite DMB standards can both be received using a single reception device.

Effects of embodiments of the present invention are not limited to the above-described effects, and other effects that are not described may be understood by those skilled in the art from the accompanying claims.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise.

Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A radio reception device for receiving a first input frequency signal based on a first radio communication method and a second input frequency signal based on a second radio communication method, the radio reception device comprising:
a reception device which utilizes the first radio communication method; and
a reception device which utilizes the second radio communication method,
wherein the reception device for the first radio communication method comprises:
a first reception unit (100) which receives and amplifies the first input frequency signal;
a Local Oscillation (LO) signal generation unit (120) which generates an LO frequency signal locked to a single frequency value;
a first mixing unit (105) which outputs a frequency down-converted signal by mixing the first input frequency signal, which is amplified by the first reception unit, with the LO frequency signal, which is generated by the LO signal generation unit; and
a signal processing unit (110) which receives the frequency down-converted signal output from the first mixing unit and performs signal processing, and
wherein the reception device for the second radio communication method comprises:
a second reception unit (200) which receives and amplifies the second input frequency signal;
a frequency divider (204) which divides the signal, which is generated by the LO signal generation unit at a predetermined division ratio; and
a second mixing unit (205) which outputs a frequency down-converted signal by mixing the second input frequency signal, which is amplified by the second reception unit, with a signal output by of the frequency divider, and inputs the frequency down-converted signal to the signal processing unit (110).

2. The radio reception device of claim 1, wherein the first radio communication method is Satellite-Digital Multimedia Broadcasting (S-DMB), and the second radio communication method is Terrestrial-Digital Multimedia Broadcasting (T-DMB).

3. The radio reception device of claim 2, wherein the second reception unit comprises:
a second-first reception unit (200A) which receives an L-band frequency signal; and
a second-second reception unit (200B) which receives a band-III frequency signal.

4. The radio reception device of claim 3, wherein the frequency divider (204) comprises a 1/2 divider which performs division by 2 if the L-band frequency signal is received through the second-first reception unit (200A), and a 1/14 divider which performs division by 14 if the band-III frequency signal is received through the second-second reception unit (200B).

5. The radio reception device of claim 4, wherein the second mixing unit (205) comprises:
a second-first mixing unit (205A) which mixes a signal, which is amplified by the second-first reception unit (200A), with a signal, which results from division by the 1/2 divider; and
a second-second mixing unit (205B) which mixes a signal, which is amplified by the second-second reception unit (200B), with a signal, which results from division by the 1/14 divider.

6. The radio reception device of any of claims 2 - 5, wherein the first reception unit (100) comprises:
a first Low-Noise Amplifier (LNA) (101) which amplifies the first input frequency signal; and
a first Automatic Gain Control (AGC) (102) amplifier which automatically controls a magnitude of a signal amplified by the first LNA (101), and outputs a controlled signal to the first mixing unit (105).

7. The radio reception device of claim 5 or 6, wherein the LO signal generation unit (120) comprises:
a Voltage Controlled Oscillator (VCO) (104) which generates the LO frequency signal and outputs the LO frequency signal to the first mixing unit (105), the 1/2 divider (204A), or the 1/14 divider(204B); and
a Phase Locked Loop (PLL) synthesizer (103) which outputs a control voltage for controlling the VCO (104).

8. The radio reception device of claim 7, wherein the second-first reception unit (200A) comprises:
a second-first LNA (201A) which amplifies the L-band frequency signal;
a second-first AGC amplifier (202A) which automatically controls a magnitude of a signal amplified by the second-first LNA and outputs a controlled signal; and
a second-first Band-Pass Filter (BPF) (203A) which extracts a signal within a specific frequency band by filtering the signal output from the second-first AGC amplifier;
wherein the second-second reception unit (200B) comprises:
a second-second LNA (201B) which amplifies the received band-III band frequency signal;
a second-second AGC amplifier (202B) which automatically controls a magnitude of a signal amplified by the second-second LNA and outputs a controlled signal; and
a second-second BPF (203B) which extracts a signal within a specific frequency band by filtering the signal output from the second-second AGC amplifier.

9. The radio reception device of any of claims 5 - 8, wherein the signal processing unit (110) comprises:
a Baseband (BB) AGC amplifier (111) which receives the signal output from the first mixing unit (105), the second-first mixing unit (205A), or the second-second mixing unit (205B), and automatically controls a magnitude of the signal; and
a first BPF (112) which extracts a signal within a specific frequency band by filtering the signal controlled by the BB AGC amplifier (111).

10. The radio reception device of any of claims 7 - 9, wherein the 1/2 divider (204A) and the 1/14 divider (204B) are provided in the PLL synthesizer (103), and the respective signals resulting from division by the 1/2 divider and the 1/14 divider are buffered and then input to the second-first mixing unit (205A) and the second-second mixing unit (205B), respectively.

11. The radio reception device of any of claims 8 - 10, wherein the second-second LNA (201B) receives and amplifies a band-I or band-II frequency signal.

12. The radio reception device of claim 11, wherein the second reception unit (200) comprises:
a second VCO (220) which generates an LO frequency signal; and
a second-third mixing unit (205C) which inputs an up-converted signal to the second-first AGC amplifier (202A) by mixing a signal, which is amplified by the second-second LNA (201B), with the LO frequency signal, which is generated by the second VCO (220).

13. The radio reception device of claim 12, wherein the 1/2 divider (204A) and the 1/14 divider (204B) are provided in the PLL synthesizer (103), and the respective signals resulting from division by the 1/2 divider and the 1/14 divider are buffered and then input to the second-first mixing unit (205A) and the second-second mixing unit (205B), respectively.

14. The radio reception device of any of claims 2-13, wherein the second reception unit (200) comprises:
a second-first reception unit (200A) comprising:
a second-first LNA (201A) which amplifies the L-band frequency signal;
a second-first AGC amplifier (202A) which automatically controls a magnitude of a signal amplified by the second-first LNA and outputs a controlled signal; and
a second-first BPF (203A) which extracts a signal within a specific frequency band by filtering the signal output from the second-first AGC amplifier and inputs a signal which is obtained by the filtering, to a second-first mixing unit (205A); and
a second-second reception unit (200B) comprising:
a second-second LNA (201B) which receives and amplifies a band-I, band-II or band-III frequency signal;
a second VCO (220) which generates the LO frequency signal;
a second-second mixing unit (205B) which inputs an up-converted signal to the second-first AGC (202A) by mixing the signal, amplified by the second-second LNA (201B), with the LO frequency signal, which is generated by the second VCO (220).

15. The radio reception device of claim 14, wherein the frequency divider comprises a 1/2 divider (204A) which divides a frequency of the signal, which is generated by the LO signal generation unit, by 2, and inputs the signal, which is obtained by the division, to the second-first mixing unit (205A).

16. The radio reception device of claim 15, wherein the LO signal generation unit (120) comprises:
a first VCO (104) which generates the LO frequency signal and outputs the LO frequency signal to the first mixing unit (105) or the 1/2 divider (204A); and
a PLL synthesizer (103) which outputs a control voltage for controlling the first VCO (104).

17. The radio reception device of claim 16, wherein the 1/2 divider (204A) is provided in the PLL synthesizer (103), and the signal obtained by division of the 1/2 divider is (204A) buffered and then input to the second-first mixing unit (205A).
